(19) **Europäisches Patentamt / European Patent Office / Office européen des brevets**

(11) **EP 1 336 268 B1**

(12) # EUROPEAN PATENT SPECIFICATION

(45) Date of publication and mention
of the grant of the patent:
**23.07.2014 Bulletin 2014/30**

(51) Int Cl.:
**H04L 1/06** $^{(2006.01)}$

(21) Application number: **00969617.0**

(22) Date of filing: **23.10.2000**

(86) International application number:
**PCT/FI2000/000916**

(87) International publication number:
**WO 2002/021754 (14.03.2002 Gazette 2002/11)**

(54) **METHOD AND ARRANGEMENT FOR DIGITAL SIGNAL TRANSMISSION**

VERFAHREN UND ANORDNUNG FÜR DIE DIGITALE SIGNALÜBERTRAGUNG

PROCEDE ET MECANISME DE TRANSMISSION DE SIGNAUX NUMERIQUES

(84) Designated Contracting States:
**AT BE CH CY DE DK ES FI FR GB GR IE IT LI LU MC NL PT SE**

(30) Priority: **04.09.2000 FI 20001944**

(43) Date of publication of application:
**20.08.2003 Bulletin 2003/34**

(73) Proprietor: **Amosmet Investments LLC**
**Dover, Delaware 19904 (US)**

(72) Inventor: **TIRKKONEN, Olav**
**FIN-00720 Helsinki (FI)**

(74) Representative: **Small, Gary James et al**
**Carpmaels & Ransford LLP**
**One Southampton Row**
**London WC1B 5HA (GB)**

(56) References cited:
- **DA-SHAN SHIU ET AL.: 'Layered space-time codes for wireless communications multiple transmit antennas' IEEE CONFERENCE ON COMMUNICATIONS, 1999. ICC'99. 1999 vol. 1, June 1999, pages 436 - 440, XP000898305**
- **XIAOTONG LIN ET AL.: 'Improved space-time codes using serial concatenation' IEEE COMMUNICATIONS LETTERS vol. 4, no. 7, July 2000, XP000958655**
- **VAHID TAROKH ET AL.: 'Space-time block codes from orthogonal designs' IEEE TRANSACTIONS ON INFORMATION THEORY vol. 45, no. 5, July 1999, XP002161393**
- **VAHID TAROKH ET AL.: 'Space-time block coding for wireless communications: Performance results' IEEE JOURNAL ON SELECTED AREAS IN COMMUCATIONS vol. 17, no. 3, March 1999, XP000804974**
- **OLAV TIRKKONEN ET AL.: 'The algebraic structure of space-time block codes' FWCW'2000 (IEEE) 29 May 2000 - 30 May 2000,**
- **OLAV TIRKKONEN ET AL.: 'Minimal non-orthogonality rate 1 space-time block code for 3+Tx antennas' IEEE 6TH INT. SYMP. ON SPREAD-SPECTRUM TECH. & APPL. September 2000, NEW JERSEY, USA, XP010516615**
- **JAFARKHANI H.: 'A quasi-orthogonal space-time block code' WIRELESS COMMUNICATIONS AND NETWORKING CONFERENCE 2000. WCNC 2000 vol. 1, 2000, XP002950407**
- **OLAV TIRKKONEN ET AL.: 'Complex space-time block codes for four Tx' IEEE GLOBECOM 2000 December 2000, XP001017236**

**Description**

FIELD OF THE INVENTION

The invention relates to a method and a radio system for transmitting a digital signal in a radio system, particularly in a mobile communication system. In particular the invention relates to the use of transmit diversity.

BACKGROUND OF THE INVENTION

In telecommunication connections, the transmission path used for transmitting signals is known to cause interference to telecommunication. This occurs regardless of the physical form of the transmission path, i.e. whether the transmission path is a radio link, an optical fibre or a copper cable. Particularly in radio telecommunication there are frequently situations where the quality of the transmission path varies from one occasion to another and also during a connection.

Radio path fading is a typical phenomenon that causes changes in a transmission channel. Other simultaneous connections may also cause interferences and they can vary as a function of time and place.

In a typical radio telecommunication environment the signals between a transmitter and a receiver propagate on a plurality of routes. This multipath propagation mainly results from signal reflections from surrounding surfaces. The signals that propagated via different routes reach the receiver at different times due to different propagation time delays. Various methods have been developed in order to compensate the fading caused by this multipath propagation.

One solution to the problem is the use of diversity at the transmission end of the connection. In time diversity, interleaving and coding are used, which cause temporal diversity to a signal to be transmitted. There is a disadvantage, however, that there will be delays in the transmission, especially when it deals with a slowly fading channel. In frequency diversity, on the other hand, a signal is transmitted simultaneously at different frequencies. This is, however, an ineffective method when the coherence bandwidth of the channel is great.

In antenna diversity the same signal is transmitted to a receiver by using two or more antennas. In this case, signal components that have multipath-propagated through different channels will probably not be disturbed by the simultaneous fading.

The publication WO 99/14871 discloses a diversity method in which the symbols to be transmitted, consisting of bits, are coded in blocks of given length and in which each block is coded to a given number of channel symbols to be transmitted via two antennas. A different signal is transmitted via each antenna. For example, when the symbols to be coded are divided into blocks having the length of two bits, the channel symbols to be transmitted are formed such that the channel symbols to be transmitted via the first antenna consist of a first symbol and a complex conjugate of a second symbol, and the channel symbols to be transmitted via the second antenna consist of the second symbol and a complex conjugate of the first symbol. The described solution is, however, only applicable when two antennas are used. The solution is called space-time block coding.

The publications Tarokh, V., Jafarkhani, H., Calderbank, A.R.: Space-Time Block Codes from Orthogonal Designs, IEEE Transactions on information theory, Vol. 45 pp. 1456-1467, July 1999 and Tarokh, V., Jafarkhani, H., Calderbank, A.R.: Space-Time Block Coding for Wireless Communications: Performance Results, IEEE Journal on Selected Areas In Communication, Vol. 17 pp. 451-460, March 1999, disclose corresponding solutions which can be applied to more than two antennas. As an example, the code of the code rate ¾ is given:

$$
(z_1, z_2, z_3) \rightarrow
\begin{pmatrix}
z_1 & z_2 & \dfrac{z_3}{\sqrt{2}} & \dfrac{z_3}{\sqrt{2}} \\[2ex]
-z_2^* & z_1^* & \dfrac{z_3}{\sqrt{2}} & -\dfrac{z_3}{\sqrt{2}} \\[2ex]
\dfrac{z_3^*}{\sqrt{2}} & \dfrac{z_3^*}{\sqrt{2}} & \dfrac{(z_2 - z_2^* - z_1 - z_1^*)}{2} & \dfrac{(z_1 - z_1^* - z_2 - z_2^*)}{2} \\[2ex]
\dfrac{z_3^*}{\sqrt{2}} & -\dfrac{z_3^*}{\sqrt{2}} & \dfrac{(z_1 - z_1^* + z_2 + z_2^*)}{2} & \dfrac{-(z_1 + z_1^* + z_2 - z_2^*)}{2}
\end{pmatrix}
$$

where a star (*) refers to a complex conjugate and $z_1, z_2, z_3$ are three complex symbols to be transmitted.

In space-time coding, the most essential criteria in code selection are the achieved diversity, code rate and delay. Diversity can be described by the number of channels to be decoded independently, and for full diversity this means the same as the number of transmit antennas. The code rate is the ratio of space-time coded signal velocity to signal velocity that is coded only temporally. Delay, for its part, is the length of a space-time block. Depending on the modulation method used, either a term real coding or complex coding is used.

So far, all complex space-time block codes have belonged to two categories: a group based on real codes, halving the code rate, or a group based on square unitary matrices.

'Open-loop diversity' should have these four properties:

1. Full diversity in regard to the number of antennas.
2. Only linear processing is required in a transmitter and a receiver.
3. Transmission power is divided equally between the antennas.
4. The code rate efficiency is as high as possible.

A drawback of the above solutions is that only the requirements 1 and 2 can be fulfilled. For example, the transmission power of different antennas is divided unequally, i.e. different antennas transmit at different powers. This causes problems in the planning of output amplifiers. Furthermore, the code rate is not optimal.

As an example, the rate % code for four transmit antennas with full diversity is given in the following formula:

$$(z_1, z_2, z_3) \rightarrow \begin{pmatrix} z_1 & z_2 & z_3 & 0 \\ -z_2^* & z_1^* & 0 & -z_3 \\ -z_3^* & 0 & z_1^* & z_2 \\ 0 & z_3^* & -z_2^* & z_1 \end{pmatrix}. \tag{1}$$

In this code, the zeros on the diagonal of the code matrix clearly indicate the imbalance of power.

A layered space-time architecture is discussed in Da-Shan Shiu et al.: "Layered Space-Time Codes for Wireless Communications Using Multiple Transmit Antennas", IEEE Conference on Communications, 1999. ICC'99. 1999 vol. 1, June 1999, pages 436-440, XP000898305.

BRIEF DESCRIPTION OF THE INVENTION

It is thus an object of the invention to implement a method and an arrangement by which a more optimal diversity is achieved with different numbers of antennas. This is achieved by a method of transmitting a digital signal consisting of symbols, the method comprising the steps of coding complex symbols to channel symbols in blocks of given length utilizing space-time coding and transmitting the channel symbols via several different channels and two or more antennas, and in which method the coding is defined by a code matrix comprising an orthogonal block code with full diversity and code rate lower than one.

The method according to the invention is characterized by coding information in the matrix elements of the code matrix that correspond to zeros of the orthogonal block code, in such a manner that the resulting code matrix still has zeros, repeating the above coding step at least once, and including the coded information in the transmission.

The invention also relates to an apparatus for transmitting a digital signal consisting of symbols, which apparatus comprises means at the transmission end for coding complex symbols to channel symbols in blocks of given length utilizing space-time coding, and the coding of the means is defined by a code matrix comprising an orthogonal block code with full diversity and code rate lower than one, and means for transmitting the channel symbols via several different channels and two or more antennas.

The apparatus comprises the means for coding information in the matrix elements of the code matrix that are not used by the orthogonal block code in such a manner that the resulting code matrix still has zeros, and including the coded information in the transmission and wherein the means are configured to repeat the above coding at least once.

The invention also relates to a method of receiving a signal transmitted according to claim 1. The method is characterized by decoding and removing from the received signals symbols transmitted in the matrix elements of the code matrix that correspond to zeros of the orthogonal block code prior decoding the symbols transmitted using the code matrix.

The invention also relates to an apparatus for receiving a digital signal transmitted according to claim 1. The apparatus comprises means (328, 330) for decoding and removing from the received signals symbols transmitted in the matrix elements of the code matrix that correspond to zeros of the orthogonal block code prior decoding the symbols transmitted using the code matrix.

The solution of the invention can provide a system in which any number of transmit and receive antennas can be used and full diversity gain can be achieved by means of space-time block coding.

In a solution according to a preferred embodiment of the invention, complex block codes are applied. In several prior art block codes the power balance is not the best possible, i.e. the transmission power of different antennas varies as a function of time. This is due to the natural inefficiency of the codes. The inefficiency of codes means that in code matrices representing each code there are redundant directions which are not used. In preferred embodiments of the invention these redundant directions are utilized by transmitting additional information, for example another space-time block code, in them. The transmission is continued in the redundant directions of the successive blocks until an entire block has been transmitted.

In a preferred embodiment of the invention, additional information is thus transmitted in the redundant directions of a space-time block code with a code rate lower than one. This additional information may be another space-time block code, for example. If the original block code is called a lower level code, this added code can be called an upper level code, although the codes as such can also be the same. By means of the addition, redundant directions can be reduced and the code rate can be made higher.

The upper layers naturally affect the orthogonality of a lower layer, which is why the linear decoding of the entire code by using one step is impossible. A two-level code can, however, be decoded by means of two linear steps: first the upper layer and then the lower layer. In order to achieve the best result, instead of linear decoding the upper layer can be decoded by means of an optimal configuration search.

A potential imbalance of a two-layer code can further be used for the transmission of a third layer etc. Thus, the linear coding of an /-level code is preferably performed by means of / steps, beginning with the outer layer. The interference caused by the outer layer to the lower layer is suppressed by the upper layer detection.

Let us examine the mathematical base of the preferred embodiments. Let us select a space-time block code for $N$ transmit antennas and for the sake of clarity, for $N$ symbol intervals. The orthogonality of the code matrix restricts the number of symbols to be $K$, wherein $K \leq N$. Preferred embodiments of the invention can be applied when $K < N$. In such a case, antenna resources are used inefficiently, the code rate of the block code is lower than one and it is not power-uniformized.

The received symbol vector is a vector in an Mx$N$ -dimensional complex space which is to be called reception space. Here M is the number of receive antennas. In the following it is assumed for the sake of clarity that M=1. Now different conceptions of orthogonalities should be noticed. Firstly, there is a code matrix orthogonality, which relates to the possibility of linear decoding of a received signal and to full diversity. Secondly there is a conventional orthogonality in the reception space.

The code matrix orthogonal $K$ symbols tune the $K$-dimensional subspace to the reception space, and this subspace can be called a block code reception subspace. Since $K < N$, i.e. the dimension of the reception space is larger than that of the block code reception subspace, the reception space has room for other information as well. This additional information can be called an upper layer. This room in the reception space comprises the directions that are redundant for the code matrix, i.e. orthogonal to the block code reception subspace in the reception space.

The orthogonality of the reception space is not analogous to the code matrix orthogonality, since the latter was already maximized in connection with the selection of $K$. Thus the linear decoding by using one step is not possible. However, the redundant directions can be decoded first and they can be subtracted from the rest of the signal by means of interference cancellation. Thereafter, the remaining signal can be decoded linearly because of the orthogonality of the code matrix.

If symbols are transmitted as such in the redundant directions, full diversity gain will not be achieved. The channels are combined incoherently. In order to avoid this, space-time block coding is utilized on the upper layer in a preferred embodiment such that outputs of the redundant directions in the successive blocks comprise the blocks of the block code. This upper level code can be decoded as a common block code. After the interference suppression, the same can be done for the lower level code.

If a block code with a code rate lower than one is used on the upper level, there is still redundancy, which means that the code rate of the layered code is still lower than one. This inefficiency in some preferred embodiments of the invention is utilized by adding the upper level code to the remaining redundant directions. This process can be repeated so many times as desired and the code rate one can thus be approached asymptotically.

In some other preferred embodiments of the invention, known pilot symbols, which improve channel estimation, are added to the uppermost layer (above other layers).

The solution of the invention provides a plurality of advantages. A code rate can be increased asymptotically towards the optimal value, i.e. one. A code rate can be made higher than is allowed by the orthogonality of the original lower level code. Even after the addition of additional information there can still be redundant directions in the code, and new additional information can further be transmitted in these directions etc. In addition, transmission power is divided equally between the antennas, because by suitably adding additional information, the power that is transmitted from each antenna is made equal at each moment of time. Also known pilot symbols which can be utilized can be transmitted as additional information. Further, by applying the solution of the invention such coding can preferably be used that allows the peak-to-average power or the average-to-minimum power to be minimized.

BRIEF DESCRIPTION OF THE DRAWINGS

In the following the invention will be described in greater detail in connection with the preferred embodiments, with reference to the attached drawings, in which

Figure 1 shows an example of a system according to an embodiment of the invention,
Figure 2 shows another example of a system according to an embodiment of the invention,
Figure 3 illustrates a two-layer code, and
Figure 4 illustrates an example of an arrangement according to an embodiment of the invention.

DETAILED DESCRIPTION OF THE PREFERRED EMBODIMENTS

The invention can be used in radio systems in which at least a part of a signal can be transmitted by using at least three or more transmit antennas or three or more beams that are provided by using any number of transmit antennas. A transmission channel can be formed by using a time division, frequency division or code division multiple access method, for example. Also systems that employ combinations of different multiple access methods are systems in accordance with the invention. The examples describe the use of the invention in a universal mobile communication system utilizing a broadband code division multiple access method implemented with a direct sequential technique, yet without restricting the invention thereto.

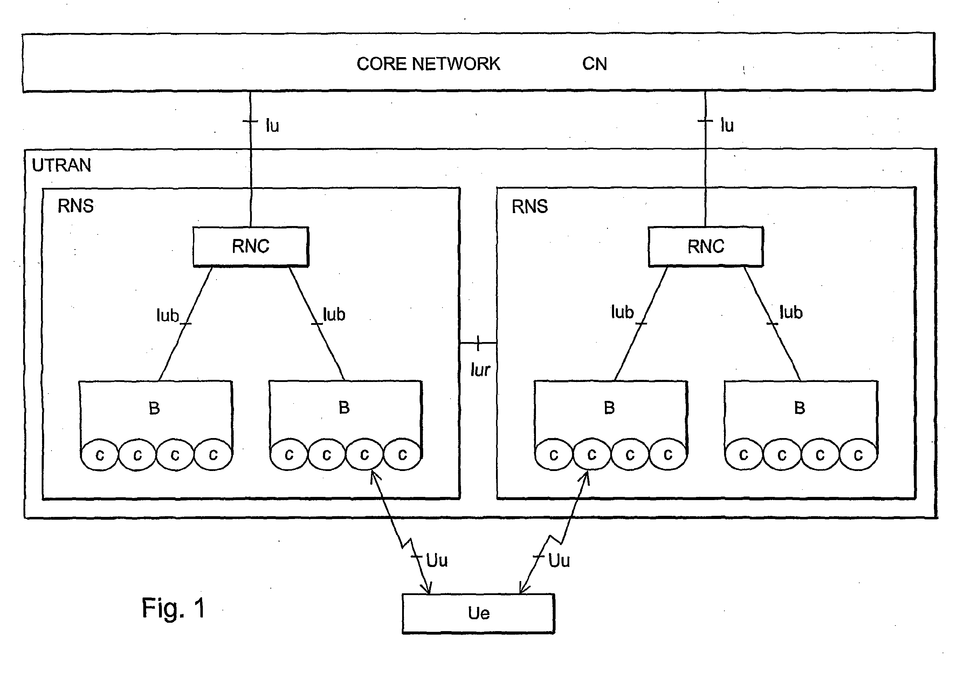

Referring to Figure 1, a structure of a mobile communication system is described by way of example. The main parts of the mobile communication system are core network CN, UMTS terrestrial radio access network UTRAN and user equipment UE. The interface between the CN and the UTRAN is called lu and the air interface between the UTRAN and the UE is called Uu.

The UTRAN comprises radio network subsystems RNS. The interface between the RNSs is called lur. The RNS comprises a radio network controller RNC and one or more nodes B. The interface between the RNC and B is called lub. The coverage area, or cell, of the node B is marked with C in the figure.

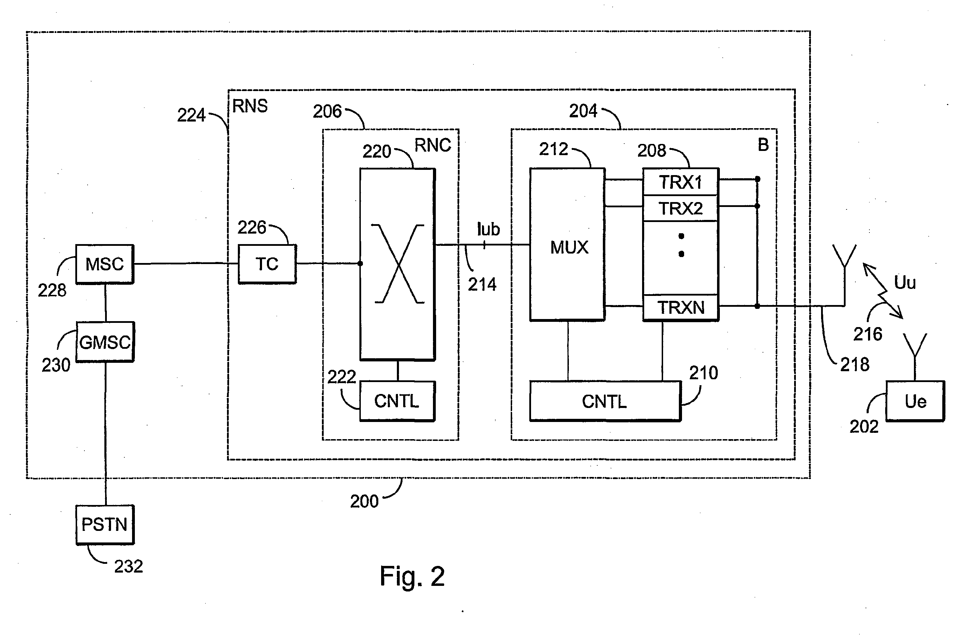

The description of Figure 1 is relatively general, and it is clarified with a more specific example of a cellular radio system in Figure 2. Figure 2 includes only the most essential blocks, but it is obvious to a person skilled in the art that the conventional cellular radio system also includes other functions and structures, which need not be further explained herein. It is also to be noted that Figure 2 only shows one exemplified structure. In systems according to the invention, details can be different from what are shown in Figure 2, but as to the invention, these differences are not relevant.

A cellular radio network typically comprises a fixed network infrastructure, i.e. a network part 200, and user equipment 202, which may be fixedly located, vehicle-mounted or portable terminals. The network part 200 comprises base stations 204, a base station corresponding to the node B shown in the previous figure. A plural number of base stations 204 are, in turn, controlled in a centralized manner by a radio network controller 206 communicating with them. The base station 204 comprises transceivers 208 and a multiplexer unit 212.

The base station 204 further comprises a control unit 210 which controls the operation of the transceivers 208 and the multiplexer 212. The multiplexer 212 arranges the traffic and control channels used by several transceivers 208 to a single transmission connection 214, which forms an interface lub.

The transceivers 208 of the base station 204 are connected to an antenna unit 218 which is used for implementing a bi-directional radio connection 216 to the user equipment 202. The structure of the frames to be transmitted in the bi-directional radio connection 216 is defined separately in each system, the connection being referred to as an air interface Uu.

The radio network controller 206 comprises a group switching field 220 and a control unit 222. The group switching field 220 is used for connecting speech and data and for combining signalling circuits. The base station 204 and the radio network controller 206 form a radio network subsystem 224 which further comprises a transcoder 226. The transcoder 226 is usually located as close to a mobile services switching centre 228 as possible, because speech can then be transferred in a cellular radio network form between the transcoder 226 and the radio network controller 206, which saves transmission capacity.

The transcoder 226 converts different digital speech coding forms used between a public switched telephone network and a radio network to make them compatible, for instance from a fixed network form to another cellular radio network form, and vice versa. The control unit 222 performs call control, mobility management, collection of statistical data and signalling.

Figure 2 further shows the mobile services switching centre 228 and a gateway mobile services switching centre 230 which controls the connections from the mobile communications system to the outside world, in this case to a public switched telephone network 232.

The invention can thus be applied particularly to a system in which signal transmission is carried out by using 'complex space-time block coding' in which the complex symbols to be transmitted are coded to channel symbols in blocks having the length of a given K in order to be transmitted via several different channels and two or more antennas. These several different channels can be formed of different time slots. As a result of the coding, the symbol block forms into a code matrix in which the number of columns corresponds to the number of antennas to be used for the transmission and the number of rows corresponds to the number of different channels, which, in case of space-time coding, is the number of time slots to be used. Correspondingly, the invention can be applied to a system in which different frequencies or different spreading codes are used instead of time slots. In this case it does not naturally deal with space-time coding but rather with space-frequency coding or space-code-division coding. The space-frequency coding could be used in an OFDM (orthogonal frequency division multiplexing) system, for example.

**Example: coding of rate 15/16 code**

Let us next examine a preferred embodiment of the invention, wherein a space-time block code of a lower layer and an upper layer block code to be coded in redundant directions are similar 4x4 codes, and the code matrix of these two codes is the above matrix (1). A two-layer rate 15/16 code is thus obtained. By leaving out one column of the code matrix, a three-antenna version is obtained from this four-antenna code.

In a two-layer code the lowest layer comprises four basic blocks. Thus the processing delay equals to 16 symbol intervals. 15 complex symbols altogether can be coded to a two-layer code when three or four antennas are used.

The redundant direction of the code matrix (1) is tuned by the matrix

$$\beta_0 = \begin{pmatrix} 0 & 0 & 0 & 1 \\ 0 & 0 & 1 & 0 \\ 0 & -1 & 0 & 0 \\ -1 & 0 & 0 & 0 \end{pmatrix}. \tag{4}$$

The matrix $\beta_0$ used in this example is by no means the only possible tuning matrix, but also other matrices can be used, as is obvious to a person skilled in the art. The described matrix provides the advantage that it provides the decoding with an orthogonal noise component.

The selection of the above matrix (4) can be explained in the following way. Let us define $R = C(\bar{z})\alpha +$ noise as a received symbol, when a conventional matrix (1) is used as a code matrix and $\alpha$ is a vector denoting the channel. For this $R$, the orthogonality of a block code reception subspace in the reception space in proportion to the reception subspace of the upper layer is:

$$\alpha^T \beta_0 R = 0 + \text{noise}. \tag{5}$$

To construct the upper level code, zeros in the lower level code are filled with block code rows of the upper level. The upper level matrix, which replaces the zeros in the lower level matrix, is formed of the code matrix (1) and the redundancy matrix $\beta_0$ (4):

$$C^{(2)} = \begin{pmatrix} z_{13} & z_{14} & z_{15} & 0 \\ -z^*_{14} & z^*_{13} & 0 & -z_{15} \\ -z^*_{15} & 0 & z^*_{13} & z_{14} \\ 0 & z^*_{15} & -z^*_{14} & z_{13} \end{pmatrix}. \tag{7}$$

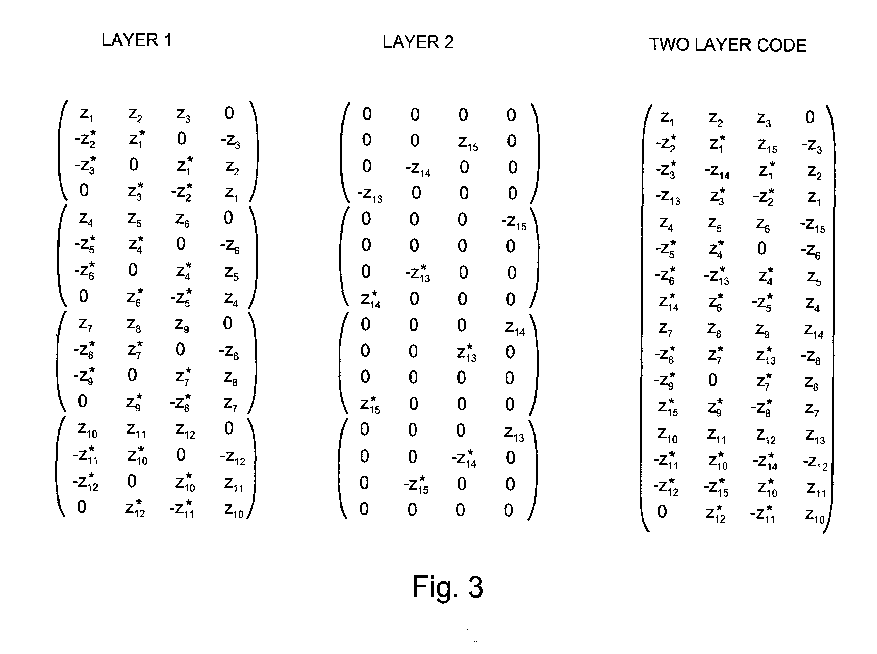

A matrix, which is constructed from the product of the redundancy matrix $\beta_0$ and such a matrix that has one row of the matrix (7) on its diagonal, is added to each sub-block of the lower layer. The resulting two-layer block code is shown in Figure 3. The first column of Figure 3 includes the code of the first layer, the second column includes the code of the second layer and the third column includes the two-layer code.

The two-layer code further comprises some zeros. Either known pilot symbols or a code matrix row of the third layer block code can, if desired, be placed to the table of Figure 3 to replace these zeros. By repeating this four times for each block of the third layer, a three-layer rate 63/64 code is obtained for four transmit antennas.

By repeating the addition procedure further for the 63/64 code, a four-layer rate 255/256 code is obtained for four antennas with a processing delay 256, and further a five-layer rate 1023/1024 code for four antennas with a processing delay 1024 and finally an /-layer rate $1-2^{-2/}$ four-antenna code with a processing delay $2^{2/}$. The corresponding three-antenna codes are obtained by leaving out one column.

Finally, if desired, known pilot symbols can be used for replacing the remaining zeros. Thus the code becomes completely power-uniformized.

**Example: decoding of rate 15/16 code**

Let us next examine a decoding method which can be applied to the reception of signals that are coded by using the above manners. An example of decoding the signal of one antenna is given herein, but the method can be employed for more antennas as well.

The optimal decoding should comprise a configuration search of the upper level. Thus, in case of the two-layer code of Figure 3, for instance, the optimal decoding comprises the steps of going through all $4^3$, i.e. 64, symbol combinations of the upper layer, deleting them from the received signals of the lower layer and decoding the lower layer and searching the combination that minimizes the Euclidean distance of the used metric to the detected signal. The optimal decoding is not sensitive to channel variations between the successive blocks of the lowest layer, whereupon a multiple layer code is as sensitive to the fading speed as the block code of the lowest layer.

Let us first examine the decoding of the lowest layer, which can be performed in accordance with the prior art, provided that the interferences of the upper layers are suppressed. The maximum likelihood detection metric of the 4x4 block code according to the matrix (1) for the $k$th transmitted symbol $z_k$ is:

$$M_k = \left| Tr\left(\beta_{k+}\alpha R^H + R\alpha^H \beta^H{}_{k-}\right) - z_k \right|^2 + \left(Tr(\alpha^H\alpha) - 1\right)\left|z_k\right|^2 \qquad (8)$$

where Tr refers to a matrix trace, i.e. the sum of the diagonal elements, H refers to the transpose of the complex conjugate, $\alpha$ is a channel weight matrix, R is the matrix of the received symbols, and the decoding matrices are:

$$\beta_{1-} = \begin{pmatrix} 1 & 0 & 0 & 0 \\ 0 & 0 & 0 & 0 \\ 0 & 0 & 0 & 0 \\ 0 & 0 & 0 & 1 \end{pmatrix}, \quad \beta_{2-} = \begin{pmatrix} 0 & 1 & 0 & 0 \\ 0 & 0 & 0 & 0 \\ 0 & 0 & 0 & 1 \\ 0 & 0 & 0 & 0 \end{pmatrix}, \quad \beta_{3-} = \begin{pmatrix} 0 & 0 & 1 & 0 \\ 0 & 0 & 0 & -1 \\ 0 & 0 & 0 & 0 \\ 0 & 0 & 0 & 0 \end{pmatrix}$$

$$\beta_{1+} = \begin{pmatrix} 0 & 0 & 0 & 0 \\ 0 & 1 & 0 & 0 \\ 0 & 0 & 1 & 0 \\ 0 & 0 & 0 & 0 \end{pmatrix}, \quad \beta_{2+} = \begin{pmatrix} 0 & 0 & 0 & 0 \\ -1 & 0 & 0 & 0 \\ 0 & 0 & 0 & 0 \\ 0 & 0 & -1 & 0 \end{pmatrix}, \quad \beta_{3+} = \begin{pmatrix} 0 & 0 & 0 & 0 \\ 0 & 0 & 0 & 0 \\ -1 & 0 & 0 & 0 \\ 0 & 1 & 0 & 0 \end{pmatrix}.$$

The aim is to minimize this metric, which means that the metric is used as a criterion for deciding which symbol $z_k$ comprises.

Let us next examine the iterative interference suppression procedure for the two-layer code of Figure 3, the procedure converging towards the optimal decoding.

The term an denotes a complex channel weight between the nth transmit antenna and the receive antenna. Thus, the channel vector for a four-antenna transmission is $\alpha = (\alpha_1, \alpha_2, \alpha_3, \alpha_4)$. The 4x4 blocks of the two-layer code, which correspond to the lower layer blocks, are marked with $C(\bar{z})_{2\text{-layer, }m}$, m = 1,2,3,4. Correspondingly, the received symbols in the sixteen intervals that are covered by the code can be divided into four groups:

$$_mR = C(\bar{z})_{\text{2-layer},m}\,\alpha + \text{noise}, \; m = 1,2,3,4. \tag{9}$$

To be exact, the received symbols are:

$$_1R = \begin{pmatrix} \alpha_1 z_1 + \alpha_2 z_2 + \alpha_3 z_3 \\ \alpha_2 z_1^* - \alpha_1 z_2^* - \alpha_4 z_3 + \alpha_3 z_{15} \\ \alpha_3 z_1^* + \alpha_4 z_2 - \alpha_1 z_3^* - \alpha_2 z_{14} \\ \alpha_4 z_1 - \alpha_3 z_2^* + \alpha_2 z_3^* - \alpha_1 z_{13} \end{pmatrix} + \text{noise} \tag{10}$$

$$_2R = \begin{pmatrix} \alpha_1 z_4 + \alpha_2 z_5 + \alpha_3 z_6 - \alpha_4 z_{15} \\ \alpha_2 z_4^* - \alpha_1 z_5^* - \alpha_4 z_6 \\ \alpha_3 z_4^* + \alpha_4 z_5 - \alpha_1 z_6^* - \alpha_2 z_{13} \\ \alpha_4 z_4 - \alpha_3 z_5^* + \alpha_2 z_6^* + \alpha_1 z_{14} \end{pmatrix} + \text{noise} \tag{11}$$

$$_3R = \begin{pmatrix} \alpha_1 z_7 + \alpha_2 z_8 + \alpha_3 z_9 + \alpha_4 z_{14} \\ \alpha_2 z_7^* - \alpha_1 z_8^* - \alpha_4 z_9 + \alpha_3 z_{13}^* \\ \alpha_3 z_7^* + \alpha_4 z_8 - \alpha_1 z_9^* \\ \alpha_4 z_7 - \alpha_3 z_8^* + \alpha_2 z_9^* + \alpha_1 z_{15} \end{pmatrix} + \text{noise} \tag{12}$$

$$_4R = \begin{pmatrix} \alpha_1 z_{10} + \alpha_2 z_{11} + \alpha_3 z_{12} + \alpha_4 z_{13} \\ \alpha_2 z_{10}^* - \alpha_1 z_{11}^* - \alpha_4 z_{12} - \alpha_3 z_{14}^* \\ \alpha_3 z_{10}^* + \alpha_4 z_{11} - \alpha_1 z_{12}^* - \alpha_2 z_{15}^* \\ \alpha_4 z_{10} - \alpha_3 z_{11}^* + \alpha_2 z_{12}^* \end{pmatrix} + \text{noise}. \tag{13}$$

After the interference caused by the upper layer symbols is (partly) suppressed, each of these sub-blocks can be decoded as 4x4 blocks in the form of the matrix (1) by using the metric of the equation (8).

On the other hand, when the interference is suppressed from the lowest layer, the equations (10 to 13) show that each received signal comprises information on only one upper level symbol multiplied by the channel. The maximum rate combination can be performed for them by multiplying them by a suitable channel estimate.

As a basis for iterative interference suppression in case of slowly fading channels, linear $l$-step decoding can be used, which is described in the following. In fast fading channels, the iterations should be started by detecting the lowest layer without interference suppression.

Let us next examine linear $l$-step decoding, i.e. a detection and interference suppression method, whereby the previously described $l$-layer code is decoded by using $l$ linear steps. It is assumed that the channels are almost static over the code processing time $2^{2l}$.

In addition to the estimated channel, a vector of the squared channels $\alpha^{(2)} = (\alpha_1^2, \alpha_2^2, \alpha_3^2, \alpha_4^2)$ as well as a vector of the fourth powers of the channel $\alpha^{(4)} = (\alpha_1^4, \alpha_2^4, \alpha_3^4, \alpha_4^4)$ for the $l$-layer code and a vector of the $2l$-2th powers of the channel $\alpha^{(2l-2)} = (\alpha_1^{2l-2}, \alpha_2^{2l-2}, \alpha_3^{2l-2}, \alpha_4^{2l-2})$ are required.

First the two-layer code of Figure 3 is decoded.

The pseudo-received symbol of the second layer can be constructed from each set $_mR$ of four received symbols in the equations (10 to 13),

$$R_m^{(2)} = -\alpha^T \beta_0 \,_mR. \tag{14}$$

T refers to a transpose. This equation is a good illustration of the elimination of the information, which is coded in the redundant directions of the code matrix, from the received signal.

The pseudo-received symbols according to the equation (14) comprise the information of the first four blocks, the information being coded in the redundant directions of the first layer. The vector of these pseudo-received symbols has the form

$$R^{(2)} = \begin{pmatrix} \alpha_1^2 z_{13} + \alpha_2^2 z_{14} + \alpha_3^2 z_{15} \\ \alpha_2^2 z_{13}^* - \alpha_1^2 z_{14}^* - \alpha_4^2 z_{15} \\ \alpha_3^2 z_{13}^* + \alpha_4^2 z_{14} - \alpha_1^2 z_{15}^* \\ \alpha_4^2 z_{13} - \alpha_3^2 z_{14}^* + \alpha_2^2 z_{15}^* \end{pmatrix} + \text{noise.} \tag{15}$$

The metric according to the equation (8) can now be applied to decode the symbols $z_{13}$, $z_{14}$ and $z_{15}$. The metric is illustrated by the formula

$$M_k^{(2)} = \left| R^{(2)H} \beta_{k+} \alpha^{(2)} + \alpha^{(2)H} \beta^H_{k-} R^{(2)} - z_k \right|^2 + \left( \alpha^{(2)H} \alpha^{(2)} - 1 \right) |z_k|^2 \tag{16}$$

which gives the estimate $z_{12+k}$, when the decoding matrices $\beta_{k\pm}$ that were described after the equation (8) are used.

These estimates should now be subtracted from the received symbols. To minimize the interference, MAP (maximum a posteriori) estimates, for instance, can be calculated for the transmitted upper layer symbols $\{\hat{z}_{13}, \hat{z}_{14}, \hat{z}_{15}\}$ and for the upper layer code matrix (7)

$$\hat{C}^{(2)} = \begin{pmatrix} \hat{z}_{13} & \hat{z}_{14} & \hat{z}_{15} & 0 \\ -\hat{z}^*_{14} & \hat{z}^*_{13} & 0 & -\hat{z}_{15} \\ -\hat{z}^*_{15} & 0 & \hat{z}^*_{13} & \hat{z}_{14} \\ 0 & \hat{z}^*_{15} & -\hat{z}^*_{14} & \hat{z}_{13} \end{pmatrix} . \tag{17}$$

If matrices, which have rows of this matrix (17) on their diagonal, are marked with the term

$$\hat{C}_m^{(2, diag)} \text{, } m = 1,2,3,4$$

the interference can be suppressed from the four successive received symbols in the equation (9):

$$_m\overline{R} = \,_mR - \beta_0 \, \hat{C}_m^{(2,diag)} \, \alpha. \tag{18}$$

These interference-suppressed blocks $_m\overline{R}$ can be decoded in accordance with the prior art as space-time block codes similarly as in the equation (8). It should be taken into account that interference only occurs in one direction: the symbols of the upper layer interfere with the lower layer, but not vice versa.

For codes with three or more layers, the above described procedure is repeated iteratively equivalent times, always starting from the uppermost level.

Thus, if a three-layer rate 63/64 code is examined, the received 64 symbols are first divided into 16 blocks, each comprising four symbols, $_mR$, m= 1,2,..., 16. The pseudo-received symbols $R_m^{(2)}$ of the second layer are formed from each of these blocks as in the equation (14). These symbols are collected to four blocks of four symbols $_nR^{(2)}$, n= 1,...,4. Each of these blocks has the same form as the equation (15) added by the third layer interference.

The pseudo-received symbol of the third layer can be constructed from each set $_nR^{(2)}$ of four pseudo-received symbols of the second layer,

$$R_n^{(3)} = -\alpha^{(2)T}\beta_0 \, _nR^{(2)}. \tag{19}$$

The information is coded in the redundant directions of the four second layer blocks, and each second layer block further consists of four first layer blocks. The vector of the pseudo-received symbols is now

$$R^{(3)} = \begin{pmatrix} \alpha_1^4 z_{61} + \alpha_2^4 z_{62} + \alpha_3^4 z_{63} \\ \alpha_2^4 z_{61}^* - \alpha_1^4 z_{62}^* - \alpha_4^4 z_{63} \\ \alpha_3^4 z_{61}^* + \alpha_4^4 z_{62} - \alpha_1^4 z_{63}^* \\ \alpha_4^4 z_{61} - \alpha_3^4 z_{62}^* + \alpha_2^4 z_{63}^* \end{pmatrix} + \text{noise}. \tag{20}$$

This, in turn, can be decoded by means of a conversion of the equation (8):

$$M_k^{(3)} = \left| R^{(3)H}\beta_{k+}\alpha^{(4)} + \alpha^{(4)H}\beta^H_{k-}R^{(3)} - z_k \right|^2 + \left( \alpha^{(4)H}\alpha^{(4)} - 1 \right)|z_k|^2 \tag{21}$$

which gives an estimate $z_{60+k}$, when the decoding matrices $\beta_{k\pm}$ described after the equation (8) are used.

These estimates can be subtracted from the pseudo-received symbols, which were collected to blocks $_nR^{(2)}$, of the second layer. After suppressing interference from the third layer, each of these blocks can be decoded by means of the metric of the equation (16) and, after suppressing interference from the second layer, sixteen first layer blocks can be decoded by using the metric (8).

In a similar manner, a code comprising $l$ layers can be decoded, thereby taking into account that when the pseudo-received symbols of the $l$th layer are constructed, the term $\alpha^{(2l-2)}$ is used as a channel vector in the equations (14, 18) and when the metric of the $l$th layer is calculated according to the equations (16, 21), the term $\alpha^{(2l-1)}$ is used as a channel vector.

**Example: Arrangement**

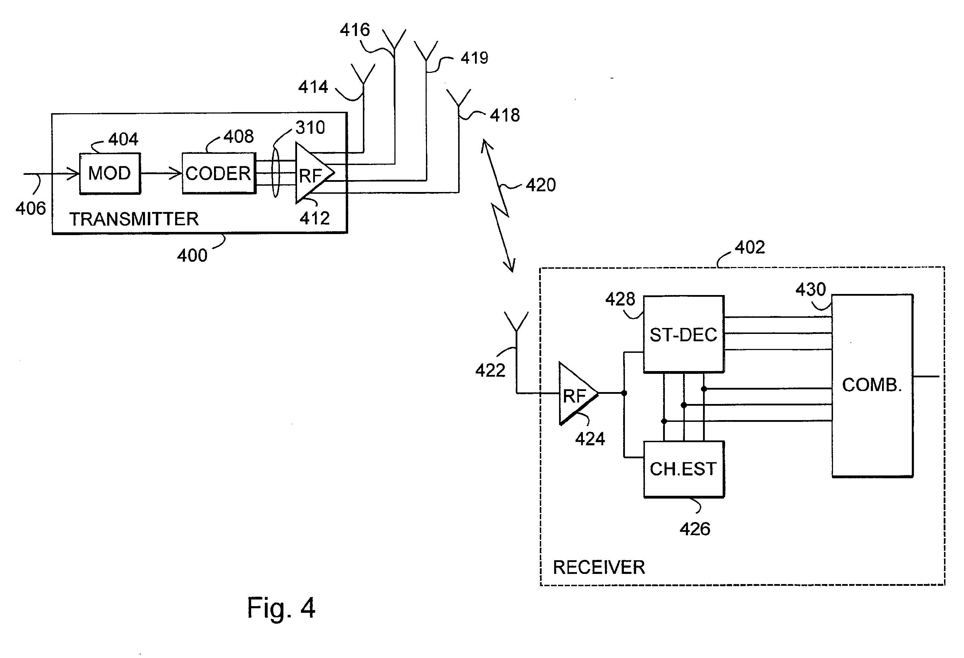

Figure 4 illustrates an example of a system according to an embodiment of the invention. The figure shows a situation where channel-coded symbols are transmitted via four antennas at different frequencies, in different time slots or by using a different spreading code. Firstly, the figure shows a transmitter 400, which is in connection with a receiver 402. The transmitter comprises a modulator 404 which receives as input a signal 406 to be transmitted, which consists of bits in a solution according to a preferred embodiment of the invention. The bits are modulated to symbols in the modulator. The symbols to be transmitted are grouped into blocks having the length of a given K. It is assumed in this example that the length of the block is three symbols. The symbols are conveyed to a coder 408. It is assumed that a two-layer code of the code rate 15/16 is used herein. Then the code matrix is, for example, as shown in Figure 3. Channel symbols 410 are conveyed via radio frequency parts 412 to four antennas 414 to 419 in this example, wherefrom they are to be transmitted. The coder can preferably be implemented by means of a processor and suitable software or alternatively by means of separate components.

Let us examine the receiver shown in Figure 4 once more. By means of the transmitter of the invention, a signal 420 is transmitted by using three or more antennas. The signal is received in the receiver 402 by means of an antenna 422 and it is conveyed to the radio frequency parts 424. The number of antennas in the receiver is not relevant for the invention. In the radio frequency parts the signal is converted to an intermediate frequency or to baseband. The converted signal is conveyed to a channel estimator 426, which forms estimates for the channel through which the signal has propagated. The estimates can be formed, for example, by means of previously known bits the signal contains, such as a pilot signal or a training sequence code. The signal is conveyed from the radio frequency parts also to a combiner 428, to which also the estimates are delivered from the channel estimator 426. The channel estimator and the radio frequency parts can be implemented by employing the known methods.

The combiner 428 receives the symbols transmitted in different time slots, typically stores them temporarily in a buffer memory and forms estimates for the original block symbols by means of the channel estimates and the above described decoding method. A detector 430 performs the symbol detection. The signal is conveyed from the detector 430 further to the other parts of the receiver. The combiner and the detector can preferably be implemented by means of a processor and suitable software or alternatively by means of separate components.

Only one example of a possible receiver is described above. The calculation and use of channel estimates, for example, can be implemented in various other ways, as is obvious to a person skilled in the art.

Although the invention has been described above with reference to the examples according to the attached drawings, it is obvious that the invention is not restricted thereto, but may be modified in a variety of ways within the scope of the attached claims.

**Claims**

1. A method of transmitting a digital signal consisting of symbols, the method comprising the steps of coding complex symbols to channel symbols (410) in blocks of given length utilizing space-time coding and transmitting the channel symbols (410) via several different channels and two or more antennas, in which method the coding is defined by a code matrix comprising an orthogonal block code with code rate lower than one, and using as many channels as transmitting antennas for transmitting each of the complex symbols, **characterized by** coding information in the matrix elements of the code matrix that correspond to zeros of the orthogonal block code, in such a manner that the resulting code matrix still has zeros,
repeating at least once the step of coding information in the matrix elements of the code matrix that corresponds to zeros of the orthogonal block code,
and including the coded information in the transmission.

2. A method as claimed in claim 1, **characterized in that** the information to be transmitted in the matrix elements of the code matrix that correspond to zeros of the orthogonal block code is coded by a block code.

3. A method as claimed in claim 2, **characterized in that** the information to be transmitted in the matrix elements of the code matrix that correspond to zeros of the orthogonal block code and the information to be transmitted in the other elements are coded by the same block code.

4. A method as claimed in claim 2, **characterized in that** the information to be transmitted in the matrix elements of the code matrix that correspond to zeros of the orthogonal block code and the information to be transmitted in the other elements are coded by a different block code.

5. A method as claimed in claim 1, **characterized in that** the information to be transmitted in the matrix elements of the code matrix that correspond to zeros of the orthogonal block code is information that is not channel-coded.

6. A method as claimed in claim 2, **characterized in that** the block coding of the information to be transmitted in the matrix elements of the code matrix that correspond to zeros of the orthogonal block code is performed in several successive blocks of the block code of the information to be transmitted in other directions.

7. A method as claimed in claim 1 or 2, **characterized in that** the information to be transmitted in the matrix elements of the code matrix that correspond to zeros of the orthogonal block code is transmitted in zero points of the code matrix of the information to be transmitted in other directions.

8. A method as claimed in claims 2 to 7, **characterized in that** known pilot symbols are transmitted in unused matrix elements of the code matrix that have remained after the addition of the information to be transmitted in the matrix elements of the code matrix that correspond to zeros of the orthogonal block code.

**9.** A method of receiving a signal transmitted according to claim 1, **characterized by** decoding and removing from the received signals symbols transmitted in the matrix elements of the code matrix that correspond to zeros of the orthogonal block code prior decoding the symbols transmitted using the code matrix.

**10.** A method as claimed in claims 2 to 7, **characterized in that** the code matrix comprises parts that depend on only one symbol, and that these parts are unitary matrices.

**11.** An apparatus for transmitting a digital signal consisting of symbols, which apparatus comprises means (408) at the transmission end for coding complex symbols to channel symbols in blocks of given length utilizing space-time coding, and the coding of the means (408) is defined by a code matrix comprising an orthogonal block code with code rate lower than one, and means (412) for transmitting the channel symbols via several different channels and two or more antennas (414 to 419) using as many channels as transmitting antennas for transmitting each of the complex symbols, **characterized in that** the apparatus comprises the means (408) for coding information in the matrix elements of the code matrix that correspond to zeros of the orthogonal block code in such a manner that the resulting code matrix still has zeros, using all matrix elements of the code matrix for transmission including the coded information in the transmission and wherein the means (408) are configured to repeat at least once the step of coding information in the matrix elements of the code matrix that corresponds to zeros of the orthogonal block code.

**12.** An apparatus as claimed in claim 11, **characterized in that** the apparatus comprises the means (408) for coding the information to be transmitted in the matrix elements of the code matrix that correspond to zeros of the orthogonal block code by a block code.

**13.** An apparatus as claimed in claim 12, **characterized in that** the apparatus comprises the means (408) for coding the information to be transmitted in the matrix elements of the code matrix that correspond to zeros of the orthogonal block code and the information to be transmitted in the other elements by the same block code.

**14.** An apparatus as claimed in claim 12, **characterized in that** the apparatus comprises the means (408) for coding the information to be transmitted in the matrix elements of the code matrix that correspond to zeros of the orthogonal block code and the information to be transmitted in the other elements by a different block code.

**15.** An apparatus for receiving a digital signal transmitted according to claim 1,
**characterized in that** the apparatus comprises means (428, 430) for decoding and removing from the received signals symbols transmitted in the matrix elements of the code matrix that correspond to zeros of the orthogonal block code prior decoding the symbols transmitted using the code matrix.

**Patentansprüche**

**1.** Verfahren zum Übertragen eines digitalen Signals, das aus Symbolen besteht, wobei das Verfahren die Schritte des Codierens komplexer Symbole zu Kanalsymbolen (410) in Blöcken einer vorgegebenen Länge unter Nutzung einer Raum-Zeit-Codierung und Übertragen der Kanalsymbole (410) über mehrere unterschiedliche Kanäle und zwei oder mehrere Antennen, wobei in dem Verfahren das Codieren durch eine Codematrix definiert ist, die einen orthogonalen Blockcode mit einer Coderate von weniger als eins aufweist, und des Verwendens so vieler Kanäle wie Übertragungsantennen zum Übertragen jedes der komplexen Symbole aufweist, **gekennzeichnet durch** Codieren von Informationen in den Matrixelementen der Codematrix, die Nullen des orthogonalen Blockcodes entsprechen, in einer solchen Weise, dass die resultierende Codematrix immer noch Nullen aufweist,
Wiederholen mindestens einmal des Schritts des Codierens von Informationen in den Matrixelementen der Codematrix, die Nullen des orthogonalen Blockcodes entsprechen,
und Einschließen der codierten Informationen in die Übertragung.

**2.** Verfahren nach Anspruch 1, **dadurch gekennzeichnet, dass** die zu übertragenden Informationen in den Matrixelementen der Codematrix, die Nullen des orthogonalen Blockcodes entsprechen, durch einen Blockcode codiert wird.

**3.** Verfahren nach Anspruch 2, **dadurch gekennzeichnet, dass** die zu übertragenden Informationen in den Matrixelementen der Codematrix, die Nullen des orthogonalen Blockcodes entsprechen, und die zu übertragenden Informationen in den anderen Elementen durch denselben Blockcode codiert werden.

**4.** Verfahren nach Anspruch 2, **dadurch gekennzeichnet, dass** die zu übertragenden Informationen in den Matrixelementen der Codematrix, die Nullen des orthogonalen Blockcodes entsprechen, und die zu übertragenden Informationen in den anderen Elementen durch einen unterschiedlichen Blockcode codiert werden.

5. Verfahren nach Anspruch 1, **dadurch gekennzeichnet, dass** die zu übertragenden Informationen in den Matrixelementen der Codematrix, die Nullen des orthogonalen Blockcodes entsprechen, Informationen sind, die nicht kanalcodiert werden.

6. Verfahren nach Anspruch 2, **dadurch gekennzeichnet, dass** das Blockcodieren der zu übertragenden Informationen in den Matrixelementen der Codematrix, die Nullen des orthogonalen Blockcodes entsprechen, in mehreren aufeinanderfolgenden Blöcken des Blockcodes der in andere Richtungen zu übertragenden Informationen durchgeführt wird.

7. Verfahren nach Anspruch 1 oder 2, **dadurch gekennzeichnet, dass** die zu übertragenden Informationen in den Matrixelementen der Codematrix, die Nullen des orthogonalen Blockcodes entsprechen, in Nullstellen der Codematrix der in andere Richtungen zu übertragenden Informationen übertragen werden.

8. Verfahren nach Anspruch 2 bis 7, **dadurch gekennzeichnet, dass** bekannte Pilotsymbole in nicht verwendeten Matrixelementen der Codematrix übertragen werden, die nach der Addition der zu übertragenden Informationen in den Matrixelementen der Codematrix übriggeblieben sind, die Nullen des orthogonalen Blockcodes entsprechen.

9. Verfahren zum Empfangen eines Signals, das nach Anspruch 1 übertragen wird, **gekennzeichnet durch** Decodieren und Entfernen aus den empfangenen Signalen von Symbolen, die in den Matrixelementen der Codematrix übertragen werden, die Nullen des orthogonalen Blockcodes entsprechen, vor dem Decodieren der Symbole, die mittels der Codematrix übertragen werden.

10. Verfahren nach Anspruch 2 bis 7, **dadurch gekennzeichnet, dass** die Codematrix Teile aufweist, die nur von einem Symbol abhängen, und dass diese Teile unitäre Matrizen sind.

11. Vorrichtung zur Übertragung eines digitalen Signals, das aus Symbolen besteht, wobei die Vorrichtung ein Mittel (408) am Übertragungsende zum Codieren komplexer Symbole zu Kanalsymbolen in Blöcken einer vorgegebenen Länge unter Nutzung einer Raum-Zeit-Codierung, und das Codieren der Mittel (408) durch eine Codematrix definiert ist, die einen orthogonalen Blockcode mit einer Coderate von weniger als eins aufweist, und ein Mittel (412) zum Übertragen der Kanalsymbole über mehrere unterschiedliche Kanäle und zwei oder mehrere Antennen (414 bis 419) aufweist, wobei so viele Kanäle wie Übertragungsantennen zum Übertragen jedes der komplexen Symbole verwendet werden, **dadurch gekennzeichnet, dass** die Vorrichtung das Mittel (408) zum Codieren von Informationen in den Matrixelementen der Codematrix, die Nullen des orthogonalen Blockcodes entsprechen, in einer solchen Weise, dass die resultierende Codematrix immer noch Nullen aufweist, wobei alle Matrixelemente der Codematrix zur Übertragung einschließlich der codierten Informationen in der Übertragung verwendet werden, aufweist und wobei das Mittel (408) konfiguriert ist, mindestens einmal den Schritt des Codierens der Informationen in den Matrixelementen der Codematrix zu wiederholen, die Nullen des orthogonalen Blockcodes entsprechen.

12. Vorrichtung nach Anspruch 11, **dadurch gekennzeichnet, dass** die Vorrichtung das Mittel (408) zum Codieren der zu übertragenden Informationen in den Matrixelementen der Codematrix, die Nullen des orthogonalen Blockcodes entsprechen, durch einen Blockcode aufweist.

13. Vorrichtung nach Anspruch 12, **dadurch gekennzeichnet, dass** die Vorrichtung das Mittel (408) zum Codieren die zu übertragenden Informationen in den Matrixelementen der Codematrix, die Nullen des orthogonalen Blockcodes entsprechen, und der zu übertragenden Informationen in den anderen Elementen durch denselben Blockcode aufweist.

14. Vorrichtung nach Anspruch 12, **dadurch gekennzeichnet, dass** die Vorrichtung das Mittel (408) zum Codieren der zu übertragenden Informationen in den Matrixelementen der Codematrix, die Nullen des orthogonalen Blockcodes entsprechen, und der zu übertragenden Informationen in den anderen Elementen durch einen unterschiedlichen Blockcode aufweist.

15. Vorrichtung zum Empfang eines digitalen Signals, das nach Anspruch 1 übertragen wird,
**dadurch gekennzeichnet, dass** die Vorrichtung Mittel (428, 430) zum Decodieren und Entfernen aus den empfangenen Signalen von Symbolen, die in den Matrixelementen der Codematrix übertragen werden, die Nullen des orthogonalen Blockcodes entsprechen, vor dem Decodieren der Symbole, die mittels der Codematrix übertragen werden, aufweist.

## Revendications

1. Procédé de transmission d'un signal numérique constitué de symboles, le procédé comprenant les étapes consistant à coder des symboles complexes en symboles de canal (410) dans des blocs de longueur donnée à l'aide d'un codage espace-temps et transmettre les symboles de canal (410) par plusieurs canaux différents et au moins deux antennes, procédé dans lequel le codage est défini par une matrice de code comprenant un code de bloc orthogonal avec un débit de code inférieur à un, et en utilisant autant de canaux que d'antennes de transmission pour transmettre chacun des symboles complexes, le procédé étant **caractérisé par** les étapes consistant à coder des informations dans les éléments de matrice de la matrice de code correspondant à des zéros du code de bloc orthogonal, de manière à ce que la matrice de code obtenue comporte encore des zéros,
répéter au moins une fois l'étape consistant à coder des informations dans les éléments de matrice de la matrice de code correspondant à des zéros du code de bloc orthogonal, et
inclure les informations codées dans la transmission.

2. Procédé selon la revendication 1, **caractérisé en ce que** les informations à transmettre dans les éléments de matrice de la matrice de code correspondant à des zéros du code de bloc orthogonal sont codées par un code de bloc.

3. Procédé selon la revendication 2, **caractérisé en ce que** les informations à transmettre dans les éléments de matrice de la matrice de code correspondant à des zéros du code de bloc orthogonal et les informations à transmettre dans les autres éléments sont codées par le même code de bloc.

4. Procédé selon la revendication 2, **caractérisé en ce que** les informations à transmettre dans les éléments de matrice de la matrice de code correspondant à des zéros du code de bloc orthogonal et les informations à transmettre dans les autres éléments sont codées par un code de bloc différent.

5. Procédé selon la revendication 1, **caractérisé en ce que** les informations à transmettre dans les éléments de matrice de la matrice de code correspondant à des zéros du code de bloc orthogonal sont des informations qui ne sont pas soumises à un codage canal.

6. Procédé selon la revendication 2, **caractérisé en ce que** le codage en bloc des informations à transmettre dans les éléments de matrice de la matrice de code correspondant à des zéros du code de bloc orthogonal s'effectue dans plusieurs blocs successifs du code de bloc des informations à transmettre dans d'autres directions.

7. Procédé selon la revendication 1 ou 2, **caractérisé en ce que** les informations à transmettre dans les éléments de matrice de la matrice de code correspondant à des zéros du code de bloc orthogonal sont transmises dans des points zéro de la matrice de code des informations à transmettre dans d'autres directions.

8. Procédé selon les revendications 2 à 7, **caractérisé en ce que** des symboles pilotes connus sont transmis dans des éléments de matrice inutilisés de la matrice de code subsistant après l'ajout des informations à transmettre dans les éléments de matrice de la matrice de code correspondant à des zéros du code de bloc orthogonal.

9. Procédé de réception d'un signal transmis selon la revendication 1, **caractérisé par** les étapes consistant à décoder et supprimer des signaux reçus des symboles transmis dans les éléments de matrice de la matrice de code correspondant à des zéros du code de bloc orthogonal préalablement au décodage des symboles transmis en utilisant la matrice de code.

10. Procédé selon les revendications 2 à 7, **caractérisé en ce que** la matrice de code comprend des parties dépendant d'un seul et unique symbole, et **en ce que** ces parties sont des matrices unitaires.

11. Appareil de transmission d'un signal numérique constitué de symboles, l'appareil comprenant un moyen (408) à l'extrémité de transmission servant à coder des symboles complexes en symboles de canal dans des blocs de longueur donnée à l'aide d'un codage espace-temps, et le codage du moyen (408) étant défini par une matrice de code comprenant un code de bloc orthogonal avec un débit de code inférieur à un, et un moyen (412) servant à transmettre les symboles de canal par plusieurs canaux différents et au moins deux antennes (414 à 419) en utilisant autant de canaux que d'antennes de transmission pour transmettre chacun des symboles complexes, l'appareil étant **caractérisé en ce qu'**il comprend le moyen (408) servant à coder des informations dans les éléments de matrice de la matrice de code correspondant à des zéros du code de bloc orthogonal, de manière à ce que la matrice de code obtenue comporte encore des zéros, en utilisant tous les éléments de matrice de la matrice de code pour la transmission et en incluant les informations codées dans la transmission, et appareil dans lequel le moyen (408) est configuré pour répéter au moins une fois l'étape consistant à coder des informations dans les éléments de matrice de la matrice de code correspondant à des zéros du code de bloc orthogonal.

12. Appareil selon la revendication 11, **caractérisé en ce qu'**il comprend le moyen (408) servant à coder par un code de bloc les informations à transmettre dans les éléments de matrice de la matrice de code correspondant à des zéros du code de bloc orthogonal.

13. Appareil selon la revendication 12, **caractérisé en ce qu'**il comprend le moyen (408) servant à coder par le même code de bloc les informations à transmettre dans les éléments de matrice de la matrice de code correspondant à des zéros du code de bloc orthogonal et les informations à transmettre dans les autres éléments.

14. Appareil selon la revendication 12, **caractérisé en ce qu'**il comprend le moyen (408) servant à coder par un code de bloc différent les informations à transmettre dans les éléments de matrice de la matrice de code correspondant à des zéros du code de bloc orthogonal et les informations à transmettre dans les autres éléments.

15. Appareil de réception d'un signal numérique transmis selon la revendication 1,
**caractérisé en ce qu'**il comprend des moyens (428, 430) servant à décoder et supprimer des signaux reçus des symboles transmis dans les éléments de matrice de la matrice de code correspondant à des zéros du code de bloc orthogonal préalablement au décodage des symboles transmis en utilisant la matrice de code.

Fig. 1

Fig. 2

EP 1 336 268 B1

TWO LAYER CODE

LAYER 2

LAYER 1

Fig. 3

Fig. 4

EP 1 336 268 B1

**EP 1 336 268 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9914871 A

**Non-patent literature cited in the description**

- **TAROKH, V. ; JAFARKHANI, H. ; CALDERBANK, A.R.** *Space-Time Block Codes from Orthogonal Designs, IEEE Transactions on information theory,* July 1999, vol. 45, 1456-1467
- **TAROKH, V. ; JAFARKHANI, H. ; CALDERBANK, A.R.** Space-Time Block Coding for Wireless Communications: Performance Results. *IEEE Journal on Selected Areas In Communication,* March 1999, vol. 17, 451-460

- **DA-SHAN SHIU et al.** Layered Space-Time Codes for Wireless Communications Using Multiple Transmit Antennas. *IEEE Conference on Communications, 1999. ICC'99,* June 1999, vol. 1, 436-440